# EUROPÄISCHE PATENTSCHRIFT

(11) **EP 2 698 295 B1**
(45) Veröffentlichungstag und Bekanntmachung des Hinweises auf die Patenterteilung: **08.07.2020**
(21) Anmeldenummer: 13178195.7
(22) Anmeldetag: 26.07.2013
(51) Int. Cl.: B60S 9/08, F16B 7/10

(54) **Längenverstellbares Teleskoprohr, Stützwinde und Montageverfahren**
Length-adjustable telescopic tube, auxiliary winch and method of assembly
Tube télescopique réglable en longueur, béquille télescopique et procédé de montage

(30) Priorität: 15.08.2012 DE 102012214514
(43) Veröffentlichungstag der Anmeldung: 19.02.2014
(73) Patentinhaber: JOST-Werke Deutschland GmbH, 63263 Neu-Isenburg (DE)
(72) Erfinder: Seidel, Günter, 64560 Riedstadt (DE)
(74) Vertreter: Mehler Achler

(56) Entgegenhaltungen:
- EP-A2- 1 332 936
- DE-A1- 3 938 024
- DE-A1-102005 034 554

## Beschreibung

Die Erfindung betrifft ein längenverstellbares Teleskoprohr gemäß dem Oberbegriff des Anspruchs 1. Die Erfindung bezieht sich auch auf eine Stützwinde mit einem solchen Teleskoprohr sowie auf ein Montageverfahren für mindestens ein Bauteil an einem Rohr eines solchen Teleskoprohres.

Längenverstellbare Teleskoprohre, die ein Außen- und ein Innenrohr aufweisen, kommen bei Stützvorrichtungen insbesondere für Sattelauflieger oder Starrdeichselanhänger zum Einsatz.

Solche Vorrichtungen sind beispielsweise aus den Schriften EP 1 104 869 B2, DE 39 02 613 A1, EP 1 332 936 A2 und DE 10 2005 034 554 A1 bekannt.

Die EP 1 332 936 A2 offenbart eine Stützwinde mit teleskopartig verfahrbarem Innenrohr, Innenhülse und Außenhülse. Zur Sicherung enthält die Stützwinde zusätzlich zur Spindelmutter eine gegenüber dem Innenrohr drehfest angebrachte Sicherungsmutter, wobei sowohl Spindelmutter und Sicherungsmutter mittels Bolzen an Innenrohr bzw. Innenhülse befestigt sind.

Außer einer Stützwinde beschreibt die DE 10 2005 034 554 A1 ferner ein Montageverfahren einer Stützwinde, bei dem die Spindelmutter mittels verschiedener Fügebewegungen mit dem Innenrohr lösbar verbunden wird.

Bei der Vorrichtung, die in der EP 1 104 369 B2 beschrieben wird, ist ein Bauelement, das den gemeinsamen Lagerbock für die Spindel und die Getriebeeingangswelle bildet, an drei Seiten mit einem Rohr einer Teleskoprohreinrichtung verbunden, wobei die vierte Seite beabstandet zu der letzten Wandung des Rohres angeordnet ist. Hierdurch ist es möglich, eine besonders kompakte Bauform der Stützvorrichtung zu erreichen, da ein Teil oder das gesamte Getriebe zum Antrieb der Spindel innerhalb des Rohres untergebracht werden kann. Im Allgemeinen werden Stützvorrichtungen in dieser Ausführungsform komplett aus Stahl ausgeführt und die Befestigung des Bauelementes erfolgt auf den drei Seiten über Stoffschluss durch Verschweißen. Die Ausführung des Bauelementes aus Stahl ermöglicht eine steife und stabile Abstützung der im Betrieb auftretenden Kräfte bei kompakten Abmessungen. Gleichzeitig bietet der Werkstoff eine ausreichende Festigkeit zur direkten Lagerung der Spindel und der Getriebeeingangswelle, so dass auf zusätzliche Lagerbuchsen aus einem anderen Material verzichtet werden kann.

Zur Gewichtsreduzierung solcher Vorrichtungen wird in der DE 39 02 613 A1 eine Teleskopstützvorrichtung vorgeschlagen, deren Innen- und Außenrohr aus Aluminium, Aluminiumlegierung oder Kunststoff bestehen. Um die nötige Biegesteifigkeit zu erreichen, weisen diese Rohre Längsrippen auf.

Bauteile, wie z. B. die Spindelmutter oder die Druckplatte, die in der Regel aus Stahl gefertigt sind, müssen mit den Rohren aus diesen Materialien verbunden werden. Eine direkte stoffflüssige Anbindung solcher Bauteile an ein solches Rohr ist aufgrund der unterschiedlichen Materialien nur durch Kleben oder Löten möglich. Wegen der niedrigen erreichbaren Festigkeitswerte und der Komplexität der Verfahren, scheiden diese bei Teleskoprohren, die insbesondere bei Stützwinden Verwendung finden, aus. Andere Befestigungen sehen ein Verprägen oder Verstiften der zu verbindenden Komponenten vor. Ein Austausch der Bauteile erfordert in allen Fällen auch den Austausch des betreffenden Rohres.

Es ist daher Aufgabe der Erfindung, ein längenverstellbares Teleskoprohr zur Verfügung zu stellen, bei dem auf einfache Weise Bauteile an einem Rohr des Teleskoprohres befestigt werden können.

Diese Aufgabe wird mit den Merkmalen der Ansprüche 1 und 12 gelöst.

Das Bauelement des längenverstellbaren Teleskoprohres weist erste Mittel und das Rohr des längenverstellbaren Teleskoprohres zweite Mittel auf, wobei mindestens ein Steckelement mit dritten Mitteln vorgesehen ist, die mit den ersten und zweiten Mitteln zur formschlüssigen Fixierung des Bauelementes zusammenwirken, wobei das Steckelement kraftschlüssig und/oder stoffschlüssig mit dem Rohr verbunden ist. Das längenverstellbare Teleskoprohr ist dadurch gekennzeichnet, dass das dritte Mittel des Steckelementes vorzugsweise mindestens ein Steckvorsprung ist.

Das erste Mittel ist vorzugsweise in das zweite Mittel einführbar. Das dritte Mittel wirkt vorzugsweise mit den ersten und zweiten Mitteln zur formschlüssigen Fixierung in Richtung der Längsachse L des Teleskoprohres und/oder senkrecht zur Längsachse L zusammen.

Die ersten, zweiten und dritten Mittel bilden ein Stecksystem, das mehrere Vorteile aufweist.

Die Montage wird vereinfacht, weil ein aufwändiges Verschweißen von Bauelement und Rohr nicht erforderlich ist und mittels der Steckelemente das Bauelement im Rohr formschlüssig fixiert werden kann. Lediglich die Steckelemente sind kraft- oder stoffschlüssig mit dem Rohr zu verbinden, um die erforderliche Stabilität der Anordnung zu bewirken. Da die Steckelemente vorzugsweise von außen eingesteckt werden, können sie auf einfache Weise am Rohr befestigt werden.

Ein weiterer Vorteil besteht darin, dass die Materialien von Rohr und Bauelement unterschiedlich sein können, so dass auch Leichtbaumaterialien z. B. mit Stahl verbunden werden können.

Vorzugsweise ist das Bauelement ganz oder teilweise innerhalb des Rohres angeordnet.

Eine besondere Ausführungsform sieht vor, dass das Rohr das Außenrohr ist und dass das Bauelement ein druckbelastetes Bauelement ist. Dieses Bauelement kann beispielsweise ein Lagerbock oder eine Druckplatte z. B. einer Stützwinde sein.

Das Bauelement weist vorzugsweise an zwei gegenüberliegenden Seiten die ersten Mittel auf. Die ersten Mittel sind derart ausgestaltet, dass die Abmessungen des Bauelementes an diesen Stellen größer sind als der Abstand der Seitenwände des Rohres, in dem die entsprechenden zweiten Mittel angeordnet sind, in die die ersten Mittel eingeführt werden. Dies hat den Vorteil, dass das die im Betrieb wirkenden Kräfte vom Bauelement parallel zur Längsachse in das Rohr bzw. die betreffende Seitenwand des Rohres eingeleitet werden können.

Vorzugsweise bestehen das Rohr und das Bauelement aus unterschiedlichen Materialien. In diesem Fall kommt es darauf an, dass das Bauelement aus Stabilitätsgründen beispielsweise aus Stahl gefertigt ist, während das Rohr bzw. das Teleskoprohr aus einem anderen Material, wie z. B. Aluminium, Aluminiumlegierung, Titanlegierung oder Kunststoff gefertigt sein kann.

Bei Teleskoprohren können dadurch Gewichtsreduzierungen erreicht werden, was insbesondere dann von Vorteil ist, wenn solche Teleskoprohre in Stützwinden oder dergleichen Verwendung finden, weil in diesem Fall Treibstoff bei den Transportfahrzeugen eingespart wird oder die Nutzlast erhöht werden kann.

Es ist nicht ausgeschlossen, dass Bauelement und Rohr auch aus demselben Material bestehen.

Vorzugweise ist das erste Mittel des Bauelementes mindestens ein Haltevorsprung. Der Haltevorsprung ist vorzugsweise ein Randabschnitt des Bauelementes. Randabschnitte sind deswegen von Vorteil, weil bei Platten oder plattenförmigen Bauelementen keine weiteren zusätzlichen Vorsprünge angebracht werden müssen.

Vorzugsweise ist das zweite Mittel des Rohres mindestens eine Montageöffnung. Die Montageöffnung kann eine ringsum geschlossene Öffnung oder auch eine Ausnehmung sein. Die Ausführungsformen des ersten und zweiten Mittels haben den Vorteil, dass ein einfaches Zusammenstecken möglich ist.

Da das Bauelement vorzugsweise vollständig im Innenraum des Rohres zu montieren ist, ist es von Vorteil, wenn die Erstreckung mindestens eines zweiten Mittels in Richtung der Längsachse L, vorzugsweise die axiale Erstreckung der Montageöffnung in Richtung der Längsachse L, größer ist als die axiale Erstreckung des ersten Mittels, vorzugsweise die Dicke des Haltevorsprungs. Damit ist ein einfaches Einschwenken des Bauelementes in die Montageöffnung möglich. Vorzugsweise ist eine zweite Montageöffnung vorgesehen, so dass eine formschlüssige Verbindung an zwei Punkten durchgeführt werden kann.

Die Montageöffnung wird nach dem Einsetzen des Haltevorsprungs nicht vollständig ausgefüllt, insbesondere dann, wenn aus Montagegründen die Montageöffnung in ihrem Querschnitt größer gewählt ist als der Querschnitt des Haltevorsprungs. Um eine formschlüssige Fixierung des Bauelementes zu erreichen, werden die Steckelemente eingesetzt.

Dieser Steckvorsprung füllt mindestens teilweise die Montageöffnung, vorzugsweise den verbleibenden Teil der Montageöffnung aus, der nach dem Einstecken des Haltevorsprungs des Bauelements in der Montageöffnung verbleibt.

Die Ausbildung des Steckvorsprungs kann auf unterschiedliche Weise ausgeführt sein, was einerseits von der Ausgestaltung des ersten Mittels und andererseits von der Ausgestaltung des zweiten Mittels abhängt. Bevorzugt ist eine rechteckige Montageöffnung und ein im Querschnitt rechteckig ausgebildeter Haltevorsprung. Der verbleibende Freiraum in der Montageöffnung ist bei dieser Ausführungsform ebenfalls rechteckig. Es ist daher bevorzugt, den Steckvorsprung des Steckelements an diese Rechteckform der verbleibenden Öffnung anzupassen.

Eine erste Ausführungsform des Steckvorsprungs sieht mindestens einen ersten Steg vor, an dem das erste Mittel des Bauelementes anliegt. Der erste Steg ist vorzugsweise ein Horizontalsteg bezogen auf die vertikale Anordnung des Teleskoprohres.

Wenn das Teleskoprohr unter Belastung steht, wie z. B. im Betrieb befindliche Stützwinden, existiert ein Kraftfluss im Bauelement und dem Rohr. Der Formschluss kann unter Einbeziehung des Steckelementes bzw. des Steckvorsprungs in den Kraftfluss und somit indirekt oder direkt ohne Einbindung in den Kraftfluss erfolgen. Beide Varianten können über die Einbaulage des Steckelementes gewählt werden. Die Anordnung im Kraftfluss hat den Vorteil, dass das Steckelement durch Klemmkräfte zusätzlich fixiert wird.

Gemäß einer weiteren Ausführungsform kann das Steckelement zwei parallel zueinander angeordnete erste Stege aufweisen, zwischen denen eine Aufnahmenut für das erste Mittel ausgebildet ist.

Gemäß einer weiteren Ausführungsform weist das Steckelement mindestens einen zweiten Steg auf, der senkrecht zum ersten Steg angeordnet ist. Vorzugsweise ist der zweite Steg ein Vertikalsteg bezogen auf die vertikale Anordnung des Teleskoprohres. Das Vorsehen dieser beiden Stege bewirkt eine formschlüssige Fixierung in zwei senkrecht zueinander angeordneten Richtungen.

Es ist auch möglich, zwei- oder mehrere Steckelemente in einer Montageöffnung zu kombinieren.

Das Material des Steckelements kann aus Aluminium, Aluminiumlegierung, Titanlegierung, Stahl oder Kunststoff bestehen.

Vorzugsweise besteht das Steckelement aus demselben Material wie das Rohr. Dies eröffnet die Möglichkeit, zur Befestigung des Steckelementes das Steckelement an dem Rohr mindestens punktuell anzuschweißen.

Eine stoffschlüssige Verbindung von Steckelement und Rohr ist bevorzugt, was außer mit Schweißen auch mittels Kleben oder Löten erfolgen kann.

Die kraftschlüssige Verbindung von Steckelement und Rohr kann vorzugsweise mittels Schrauben erfolgen.

Vorzugsweise ist das Bauelement zusätzlich kraftschlüssig mit dem Rohr verbunden. Eine besondere Ausführungsform sieht vor, dass diese Art der Befestigung an einer Seite des Bauelementes vorgenommen wird, wo keine ersten Mittel vorgesehen sind. Durch die zusätzliche kraftschlüssige Verbindung wird die Stabilität der Kombination von Bauelement und Rohr weiter erhöht.

Die erfindungsgemäße Stützwinde umfasst ein erfindungsgemäßes Teleskoprohr sowie eine Spindel, wobei das Bauelement ein Lagerbock für die Spindel ist und der Lagerbock am Außenrohr befestigt ist.

Vorzugsweise weist das Außenrohr einen rechteckigen, insbesondere einen quadratischen Querschnitt mit Rückwand, Vorderwand und zwei Seitenwänden auf.

Das Bauelement ist vorzugsweise mit mindestens zwei Wänden, insbesondere Seitenwänden, mittels der Steckelemente formschlüssig verbunden. Damit wird gewährleistet, dass mindestens zwei Wände des Rohres vorzugsweise in der direkten Kraftflusslinie liegen. Hierdurch wird eine Biege- oder Torsionsbeanspruchung des oder der Steckelemente, soweit sie an der Kraftübertragung beteiligt sind, weitgehend vermieden. Die entsprechenden Bereiche werden hauptsächlich auf Druck beansprucht.

Vorzugsweise ist im belasteten Zustand der Stützwinde das dritte Mittel des Steckelementes im Kraftfluss zwischen dem ersten und zweiten Mittel angeordnet, was den Vorteil hat, dass die Steckelemente durch Klemmkräfte fixiert werden.

Das erfindungsgemäße Montageverfahren mindestens eines Bauelements, das erste Mittel aufweist, an und/oder in einem Rohr, das zweite Mittel aufweist, eines Teleskoprohres, das eine Längsachse L aufweist, umfasst folgende Verfahrensschritte:
a) Translatorisches Einführen des Bauelementes in das Rohr in einem bezüglich der Längsachse L gekippten Zustand (T1),
b) Ausrichten des Bauelements und Einführen der ersten Mittel des Bauelementes in die zweiten Mittel des Rohres (R2 und T3),
c) Einstecken von mindestens einem, dritte Mittel aufweisenden Steckelement in die zweiten Mittel des Rohres, wobei die dritten Mittel zur formschlüssigen Fixierung des Bauelementes mit den ersten und zweiten Mitteln zusammenwirken und
d) kraft- und/oder stoffschlüssiges Verbinden von Steckelement und Rohr.

Beim Ausrichten des Bauelements wird das Bauelement vorzugsweise senkrecht zur Längsachse L und somit in Einbaulage ausgerichtet.

Vorzugsweise wird das Steckelement von der Außenseite des Rohres eingesteckt. Es ist auch möglich, ein Steckelement von der Innenseite des Rohres einzustecken.

Vorzugsweise ist das Bauelement zusätzlich kraftschlüssig mit dem Rohr verbunden.

Vorzugsweise wird zwischen den Verfahrensschritten b) und c) das Bauelement senkrecht zur Längsachse L verschoben (T4). Diese Verschiebung erfolgt vorzugsweise in Richtung der Rückwand, um zwischen Vorderwand des Rohres und Bauelement einen Freiraum zu schaffen und gegebenenfalls an der Rückwand eine zusätzliche Befestigung vorzusehen.

Gemäß einer Ausführungsform wird im Schritt b) zuerst ein erstes von zwei ersten Mitteln des Bauelementes in ein erstes zweites Mittel eingeführt, dann das Bauelement senkrecht zur Längsachse L ausgerichtet und das Bauelement mit einem zweiten der zwei ersten Mittel senkrecht zur Längsachse in ein weiteres zweites Mittel eingeschoben.

Das Steckelement ist vorzugsweise zusätzlich stoffschlüssig mit dem Rohr verbunden.

Beispielhafte Ausführungsformen der Erfindung werden nachfolgend anhand der Zeichnungen näher erläutert.

Es zeigen:
- Figur 1: einen Vertikalschnitt durch eine Stützwinde,
- Figur 2: eine perspektivische Draufsicht auf ein Außenrohr mit einem Bauelement zu Beginn des Montageverfahrens,
- Figuren 3 bis 6: verschiedene Schnittdarstellungen und Draufsichten zur Erläuterung der Montageschritte,
- Figuren 7 bis 13a,b: verschiedene perspektivische Darstellungen der Ausführungsformen eines Steckelementes,
- Figur 14: eine perspektivische Draufsicht auf ein Rohr mit Bauelement in montiertem Zustand gemäß einer Ausführungsform,
- Figuren 15 + 16: Vertikalschnitte durch die in Figur 14 dargestellte Anordnung,
- Figuren 17a,b: perspektivische Draufsichten auf ein Rohr mit Bauelement gemäß weiterer Ausführungsformen,
- Figuren 18a,b + 19: Schnitte der in Figur 17a,b gezeigten Anordnungen, und
- Figur 20 + 22: perspektivische Draufsichten auf ein Rohr mit Bauelement gemäß einer weiteren Ausführungsform.

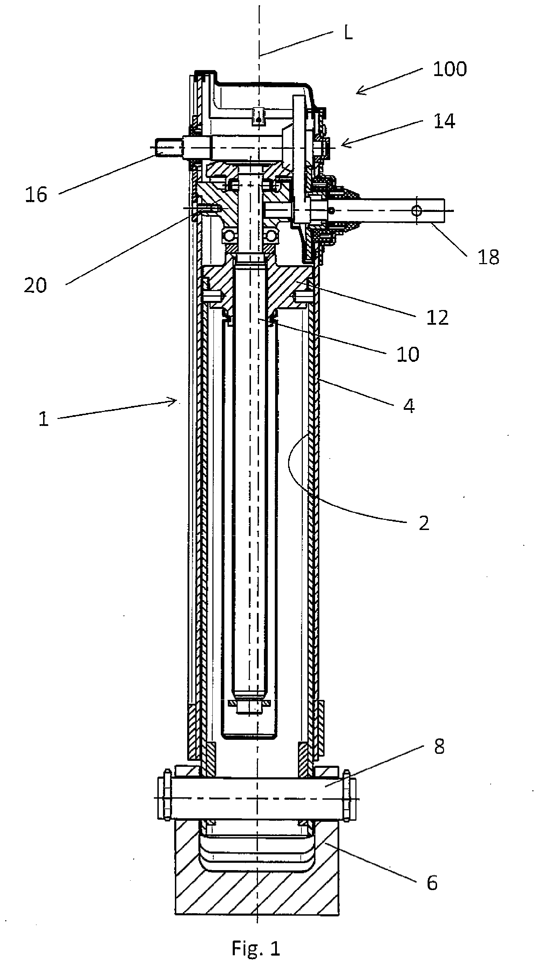

In der Figur 1 ist eine Stützwinde 100 mit einem längenverstellbaren Teleskoprohr 1 mit Innenrohr 2 und Außenrohr 4 im Vertikalschnitt dargestellt. Das Teleskoprohr 1 besitzt eine Längsachse L. Im oberen Bereich weist die Stützwinde 100 ein Getriebe 14 mit Getriebeausgangswelle 16 und Getriebeeingangswelle 18 auf. Eine Spindel 10 sowie die Getriebeeingangswelle 18 sind gemeinsam in einem Lagerbock gelagert, das das Bauelement 20 bildet. Das Bauelement 20 ist im Außenrohr 4 befestigt, wie nachfolgend anhand der Figuren im Einzelnen erläutert wird.

Am Innenrohr 2 ist eine Spindelmutter 12 sowie mittels eines Bolzens 8 ein Fußelement 6 befestigt.

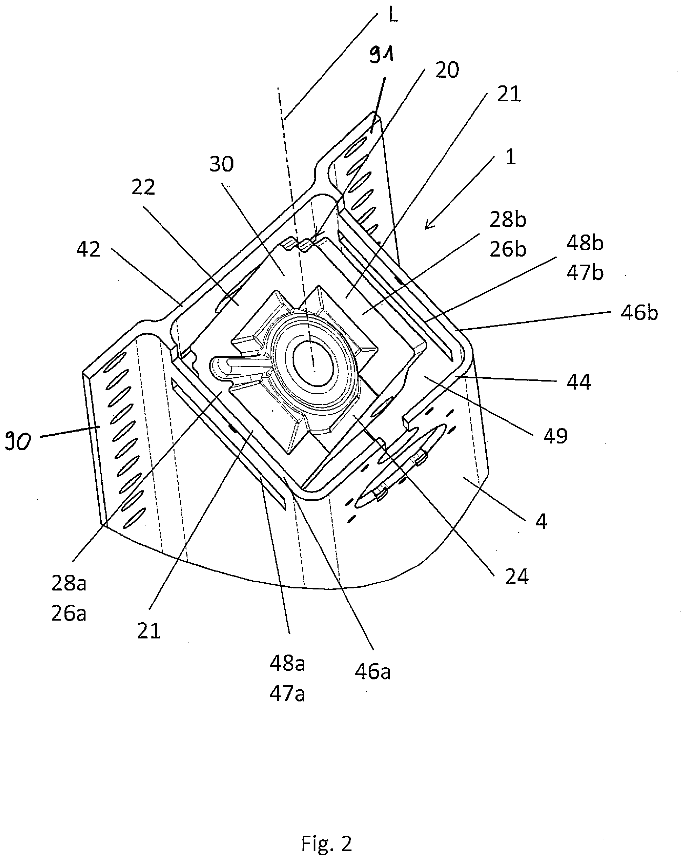

In der Figur 2 ist die perspektivische Draufsicht auf den Oberteil des Außenrohrs 4 dargestellt, wobei das Bauelement 20 für die bevorstehende Montage im Außenrohr 4 gekippt dargestellt ist. Das Bauelement 20 mit Oberseite 30 besteht im wesentlichen aus einer rechteckigen Platte mit den vier Randabschnitten 22, 24, 26a,b, wobei die Randabschnitte 26a,b die ersten Mittel 28a,b und somit die Haltevorsprünge 21 bilden.

Das Außenrohr 4 weist entsprechend einen quadratischen Querschnitt auf und besitzt eine Rückwand 42, eine Vorderwand 44 und zwei Seitenwände 46a,b, wobei die Rückwand 42 seitlich noch zwei Befestigungsbleche 90, 91 aufweist. Die Abmessungen des Bauelementes 20 sind derart gewählt, dass zwischen dem vorderseitigen Randabschnitt 24 und der Vorderwand 44 ein Freiraum 49 zur Aufnahme eines Teils des Getriebes 14 (siehe Figur 1) verbleibt.

In den beiden gegenüberliegenden Seitenwänden 46a,b sind zweite Mittel 48a,b in Gestalt von rechteckigen Montageöffnungen 47a,b vorgesehen, in die die seitlichen Randabschnitte 26a,b eingreifen. Die Montageöffnungen 47a,b sind senkrecht zur Längsachse L ausgerichtet.

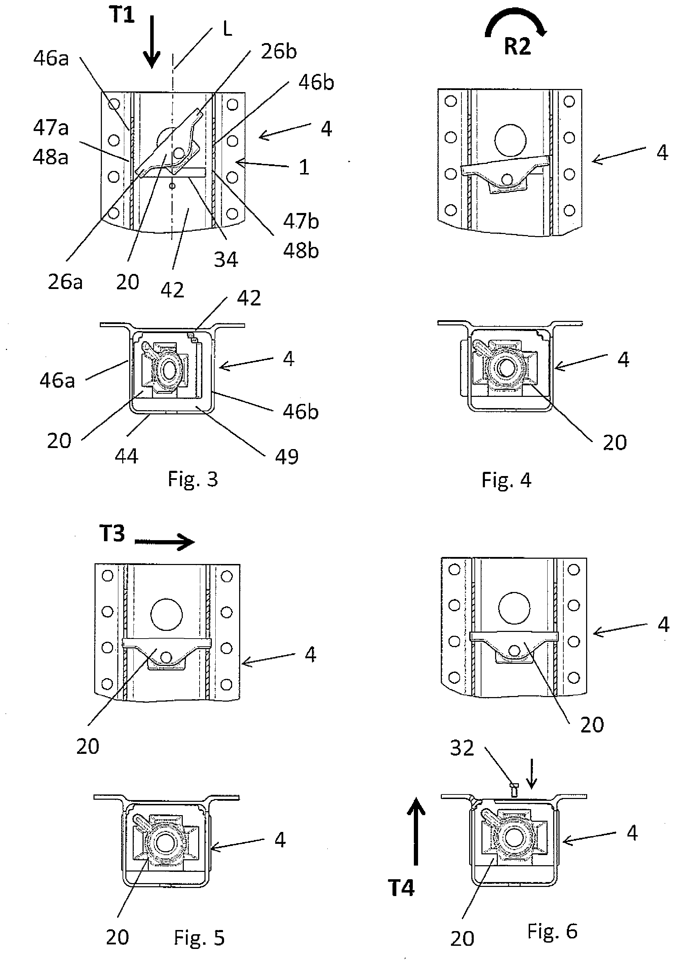

Der Montagevorgang wird anhand der Figuren 3 bis 6 erläutert, wobei jeweils der obere Teil der Figur einen Vertikalschnitt durch das Außenrohr 4 und der untere Teil der Figur die entsprechende Draufsicht zeigt.

Figur 3 zeigt die Situation gemäß der Figur 2, wobei das Bauelement 20 gekippt bezüglich der Längsachse L mittels einer Translationsbewegung T1 in das Innere des Außenrohres 4 eingeführt wird.

Mittels einer Schwenkbewegung R2 wird das Bauelement 20 senkrecht zur Längsachse L ausgerichtet und mit dem seitlichen Randabschnitt 26a in die linke Montageöffnung 47a eingeführt (siehe Figur 4).

Mittels einer anschließenden translatorischen Bewegung T3 nach rechts wird auch der Randabschnitt 26b in die Montageöffnung 47b der Seitenwand 46b eingeführt (Figur 5).

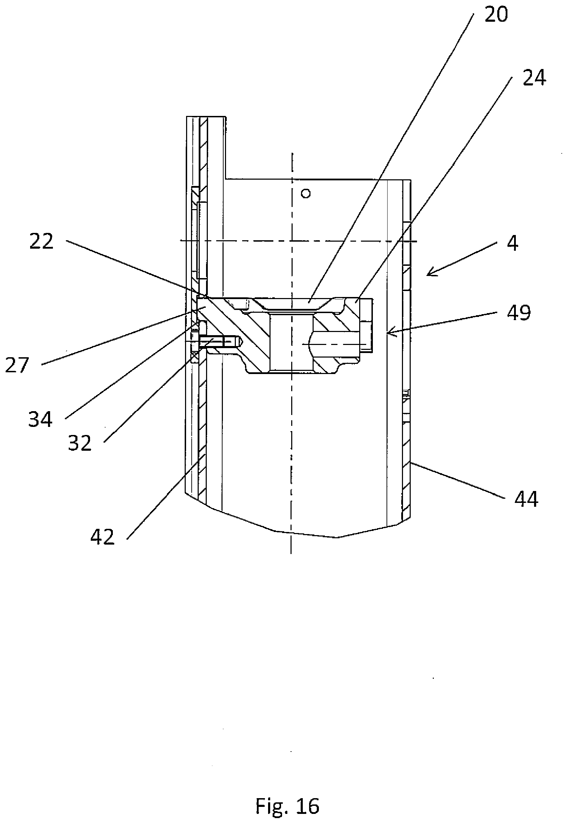

Anschließend wird das Bauelement 20 mit einer translatorischen Bewegung T4 an die Rückwand 42 geschoben, wo gegebenenfalls noch eine kraftschlüssige Befestigung vorgenommen werden kann, z. B. mit der Schraube 32 (siehe auch Figur 16).

Vor der kraftschlüssigen Verbindung werden die Steckelemente 50, 60 oder 70 in die Montageöffnung 47a,b eingesetzt.

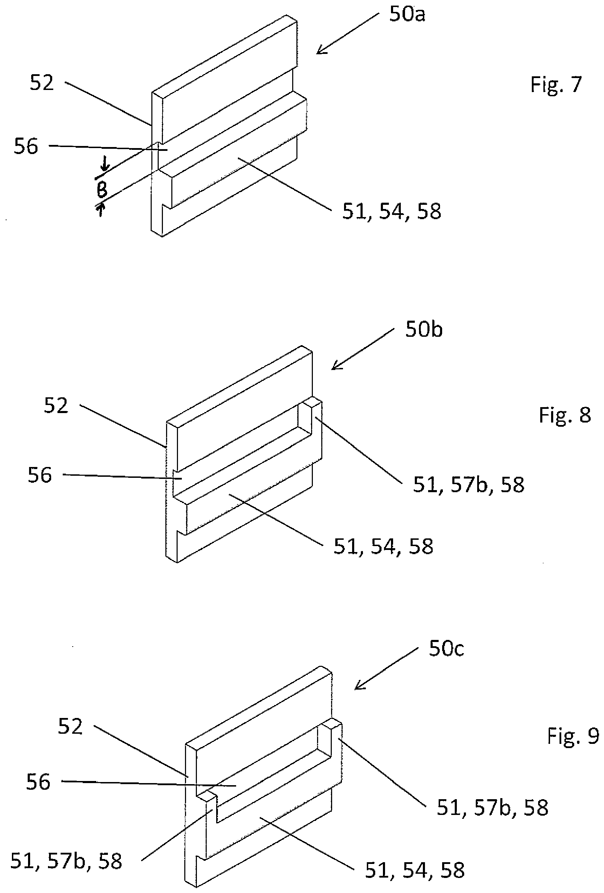

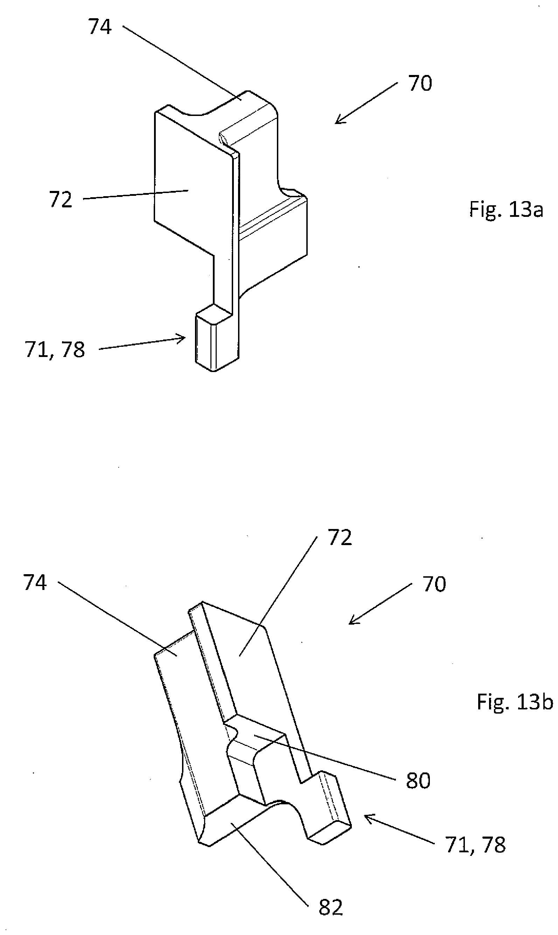

Die verschiedenen Ausführungsformen der Steckelemente 50, 60, 70 sind in den Figuren 7 bis 13a,b dargestellt.

Alle Steckelemente 50, 60, 70 besitzen eine Platte 52, 62, 72, an die mindestens ein Steckvorsprung 51, 61, 71 angeordnet ist, die die dritten Mittel 58, 68, 78 bilden.

In den Figuren 7 bis 9 wird eine erste Ausführungsform der Steckelemente 50a,b,c dargestellt, die an einer Platte 52 mindestens einen ersten Steg 54 als Steckvorsprung 51 und drittes Mittel 58 aufweisen. Zusätzlich zu diesem ersten Steg 54 können noch senkrecht dazu angeordnete zweite Stege 57a,b (Figur 8 bzw. Figur 9) als Steckvorsprünge 51 und drittes Mittel 58 vorgesehen sein, die an einem Ende oder an beiden Enden des ersten Stegs 54 angeordnet sind.

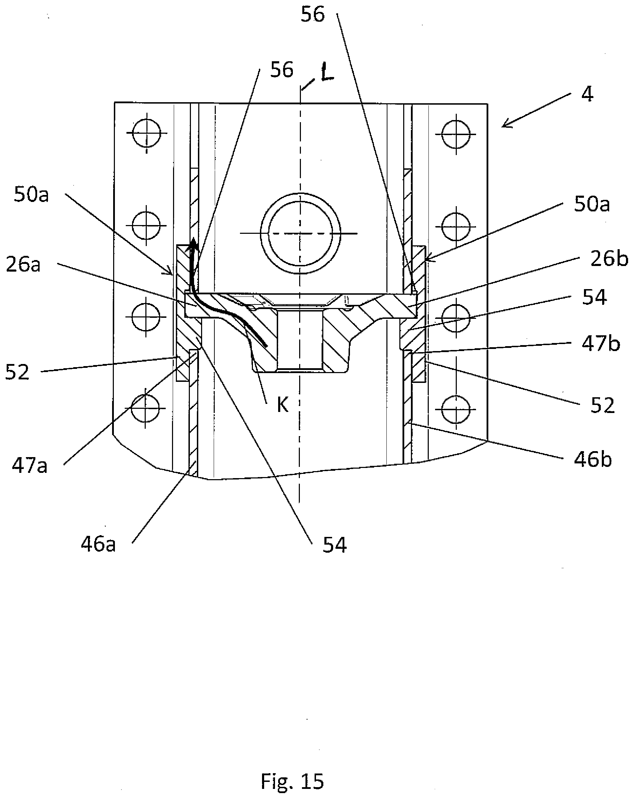

Während der erste Steg 54 eine formschlüssige Fixierung in vertikaler Richtung bewirkt, ist mit den zweiten Stegen 57a,b eine formschlüssige Fixierung in horizontaler Richtung möglich. Je nach Einsteckvariante kann der Steg im Kraftfluss (s. z. B. Pfeil K in Figur 15) angeordnet sein oder durch Drehung um 180° außerhalb des Kraftflusses.

Benachbart zum ersten Steg 54 ist eine Aufnahmenut 56 angeordnet, deren Breite B an die Dicke der Randabschnitte 26a,b angepasst ist.

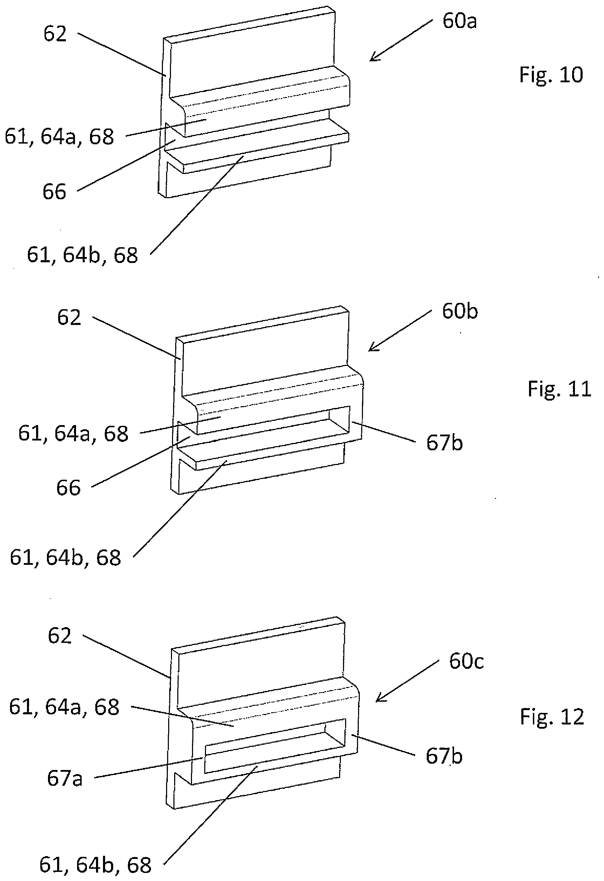

Die Figuren 10 bis 12 zeigen eine zweite Ausführungsform des Steckelements 60a,b,c mit Platte 62 und mit zwei ersten Stegen 64a,b als Steckvorsprünge 61 und dritte Mittel 68, wobei zwischen den Stegen 64a,b eine Aufnahmenut 66 ausgebildet ist. Diese Ausführungsform kann wie die erste Ausführungsform ebenfalls mit ein oder zwei senkrecht zu den ersten Stegen angeordneten zweiten Stegen 67a,b als Steckvorsprünge 61 und dritte Mittel 68 ausgestattet sein (siehe Figur 11 bzw. 12).

Alle gezeigten Ausführungsformen 50, 60 werden von der Außenseite in die Montageöffnung 47a,b gesteckt.

In den Figuren 13a und 13b ist eine dritte Ausführungsform eines Steckelementes 70 in zwei perspektivischen Darstellungen gezeigt, die vorzugsweise mit einem der Steckelemente 50, 60 der ersten und zweiten Ausführungsform gemäß der Figuren 7, 8 und 10, 11 kombiniert wird.

Diese dritte Ausführungsform wird vorzugsweise von innen in die Montageöffnung 47a,b gesteckt.

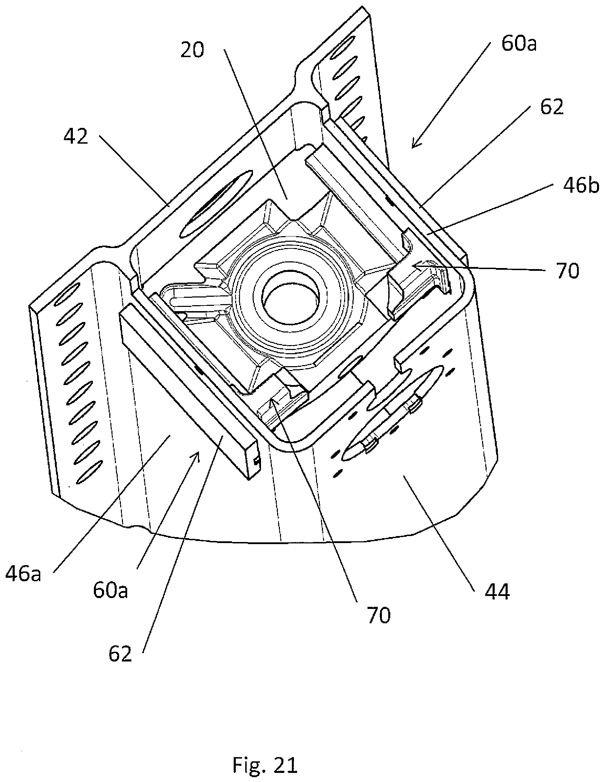

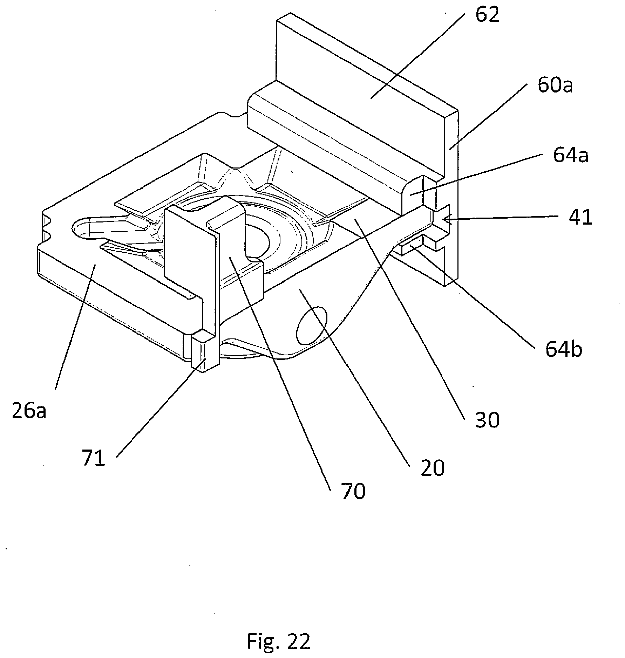

Das Steckelement 70 besitzt einen Grundkörper 74 mit einer Platte 72 und einem Steckvorsprung 71, der das dritte Mittel 78 bildet. Mit der ersten Auflagefläche 80 liegt das Steckelement 70 in montiertem Zustand z. B. auf einem Steckelement 60 auf. Mit der versetzt angeordneten zweiten Auflagefläche 82 liegt das Steckelement 70 auf der Oberseite 30 des Bauelements 20 auf. Mit der Platte 72 liegt das Steckelement 70 an der Innenfläche des Außenrohres 4 an. Insgesamt wird damit eine zusätzliche Versteifung und Sicherung bewirkt (siehe auch Figuren 21 und 22).

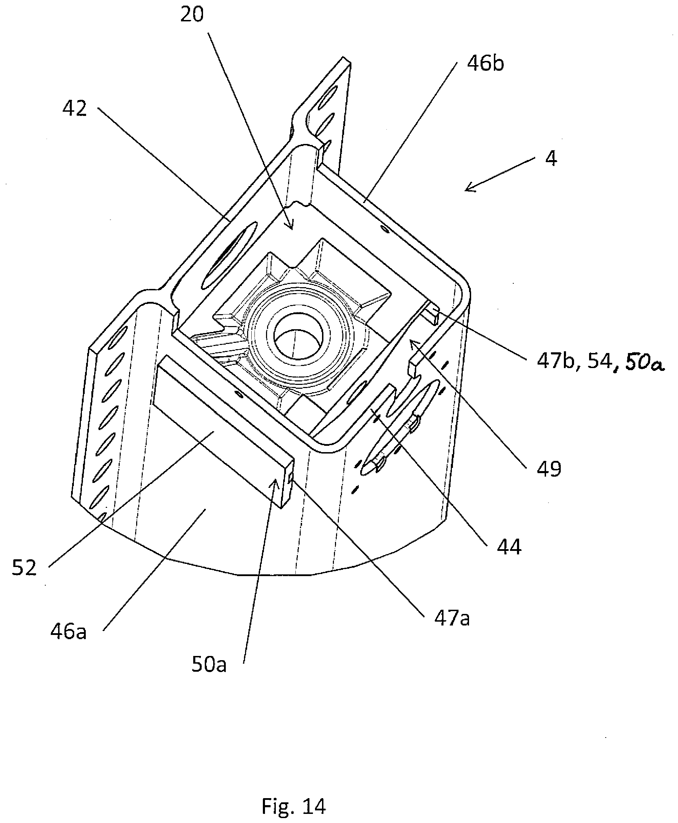

In der Figur 14 ist eine perspektivische Draufsicht auf ein Außenrohr 4 mit montiertem Bauelement 20 dargestellt. In den Montageöffnungen 47a,b ist jeweils ein Steckelement 50a (siehe Figur 7) von außen eingesteckt. Die Platte 52 des Steckelementes 50a liegt an der Außenseite der Seitenwand 46a an. Gleiches gilt für das an der Seitenwand 46b anliegende Steckelement 50a.

In der Figur 15 ist ein Vertikalschnitt durch das in Figur 14 dargestellte Außenrohr 4 zu sehen. Die ersten Stege 54 der Steckelemente 50a greifen in die Montageöffnungen 47a und 47b ein. Die Randabschnitte 26a,b des Bauelementes 20 greifen ebenfalls in die Montageöffnungen 47a,b ein und liegen jeweils auf den Stegen 54 auf. Die Montageöffnung 47a,b wird in Richtung der Längsachse L von dem Steg 54 und dem betreffenden Randabschnitt 26a,b ausgefüllt, so dass eine formschlüssige Fixierung in Richtung der Längsachse L gewährleistet ist. Der Kraftfluss bei Belastung im Anwendungsfall einer Stützwinde ist durch den Pfeil K verdeutlicht. Der Steg 54 liegt außerhalb des Kraftflusses.

Die Figur 16 zeigt eine weitere Schnittdarstellung des in Figur 14 dargestellten Außenrohres 4.

Zwischen dem vorderseitigen Randabschnitt 24 des Bauelementes 20 und der Vorderwand 44 ist ein Freiraum 49 vorhanden (s. auch Figur 2). Mit dem rückseitigen Randabschnitt 22 liegt das Bauelement 20 an der Rückwand 42 an und ist dort kraftschlüssig mit mindestens einer Schraube 32 verbunden. Das Bauelement 20 weist an dem rückseitigen Randabschnitt 22 zusätzlich einen Vorsprung 27 auf, der in eine entsprechende Öffnung 34 der Rückwand 42 eingreift. Dadurch wird eine zusätzliche Fixierung in Rückwandbereich erzielt, auch wenn dort kein Steckelement mit dritten Mitten zum Einsatz kommt. Anstelle der Schraube 32 kann auch ein Steckelement vorgesehen sein, das in gleicher Weise wie die übrigen Steckelemente am Rohr befestigt werden kann.

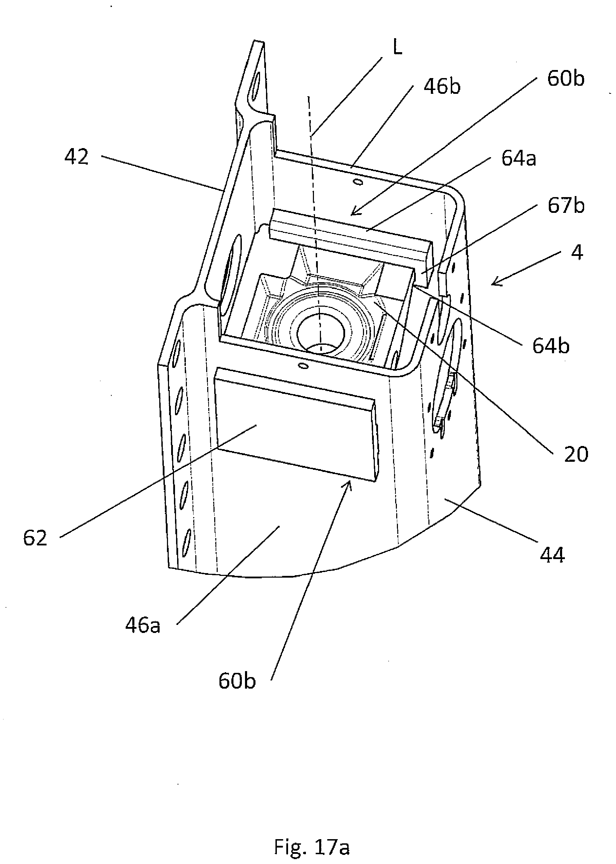

In den Figuren 17a bis 19 ist eine weitere Ausführungsform dargestellt. Die Figur 17a zeigt in perspektivischer Draufsicht ein Außenrohr 4 mit einem Bauelement 20, wobei Steckelemente 60b (siehe Figur 11) zum Einsatz kommen. Das Steckelement 60b verfügt über einen zweiten Steg 67b, so dass zu der formschlüssigen Fixierung des Bauelements 20 in Richtung der Längsachse L auch eine formschlüssige Fixierung senkrecht zur Längsachse L vorgesehen ist.

Die Steckelemente 60b sind stoffschlüssig z. B. mittels Schweißen oder Kleben mit der Seitenwand 46a,b verbunden.

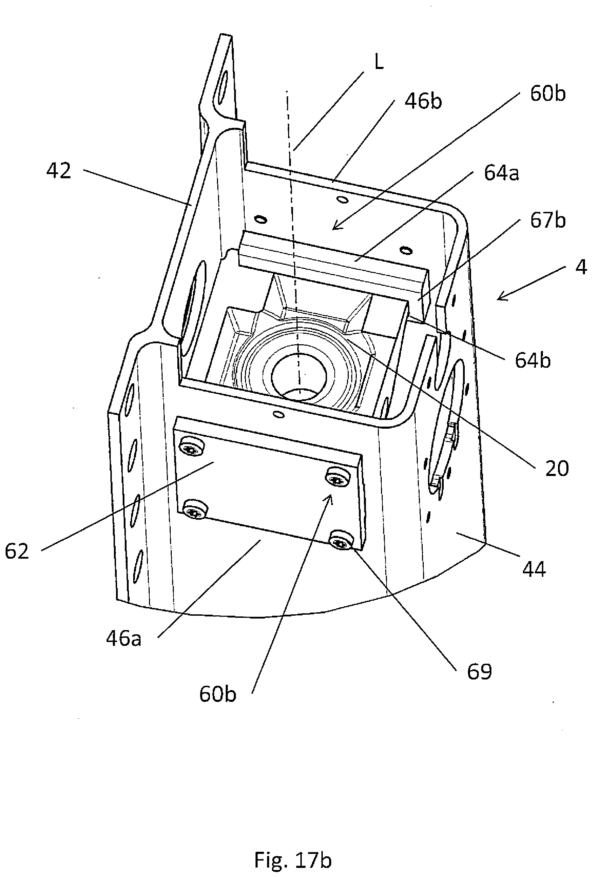

In der Figur 17b sind die Steckelemente 60b kraftschlüssig mittels der Schrauben 69 mit den Seitenwänden 46a,b verbunden.

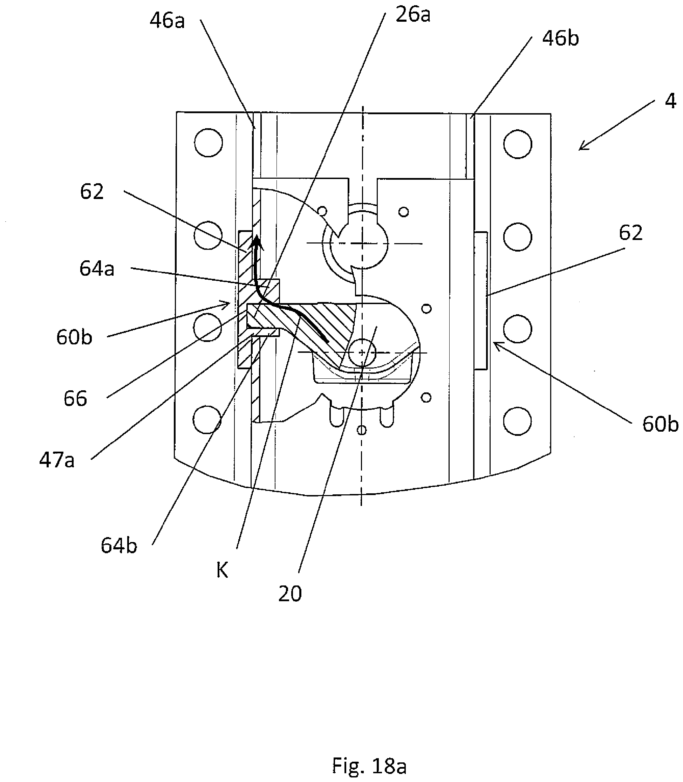

In der Figur 18a ist eine weitere Darstellung teilweise im Schnitt der in Figur 17a gezeigten Ausführungsform dargestellt. Der seitliche Randabschnitt 26a des Bauelementes 20 steckt in der Aufnahmenut 66 des Steckelements 60b zwischen den beiden Stegen 64a,b. Der Steg 64a liegt unter Belastung im Kraftfluss (siehe Pfeil K).

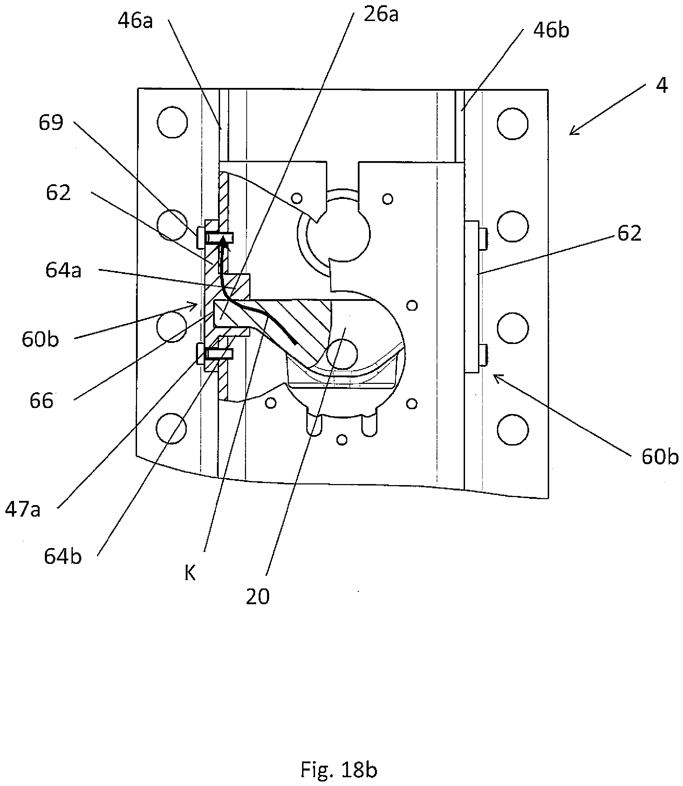

Die Figur 18b ist die entsprechende Darstellung zur Figur 18a, um die Verbindung der Steckelemente 60b mittels der an der Platte 62 angreifenden Schrauben 69 zu verdeutlichen.

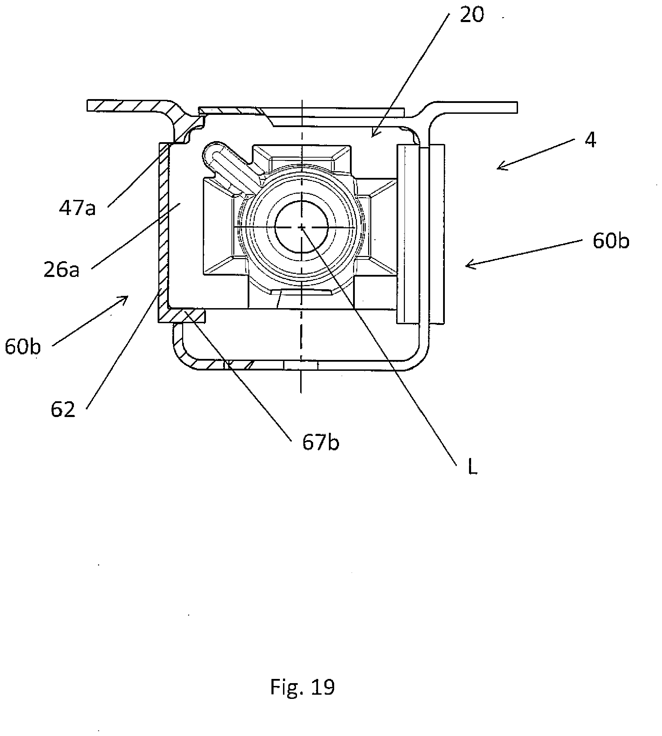

In der Figur 19 ist in Draufsicht und teilweise im Schnitt die in Figur 17 gezeigte Ausführungsform dargestellt, so dass zu sehen ist, dass der Randabschnitt 26a innerhalb des Steckelementes 60b an der Platte 62 und dem zweiten Steg 67b anliegt, wodurch eine Fixierung in Richtung senkrecht zur Längsachse gewährleistet wird.

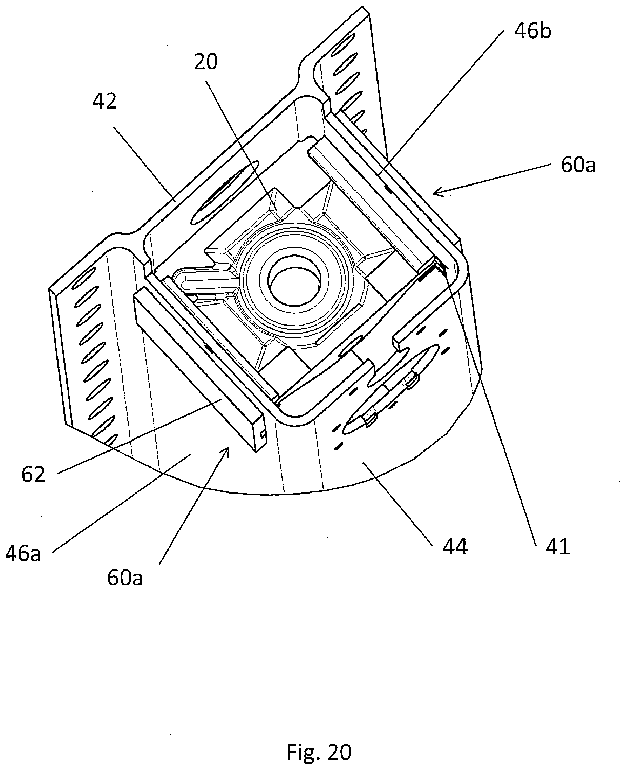

In der Figur 20 ist eine perspektivische Draufsicht auf eine weitere Ausführungsform dargestellt, wobei Steckelemente 60a (siehe Figur 10) verwendet werden. Da die Steckelemente 60a keinen zweiten Steg 67b aufweisen, verbleibt in der Montageöffnung 47a,b ein Freiraum 41. Um eine formschlüssige Fixierung in Richtung senkrecht zur Längsachse L zu gewährleisten, wird an dieser Stelle ein zusätzliches Steckelement 70 (Figur 13a,b) von der Innenseite eingesetzt, das mit seinem Steckvorsprung 71 in den Freiraum 41 passt. Dies wird in den Figuren 21 und 22 näher dargestellt, wobei in der Figur 22 die Seitenwände weggelassen wurden, so dass der Steckvorsprung 71 neben dem Randabschnitt 26a deutlich zu sehen ist.

Wie die Figur 21 zeigt, liegt das Steckelement 70 mit seiner Platte 72 an der Innenseite der Seitenwand 46a,b an. Außerdem liegt das Steckelement 70 mit der Auflagefläche 80 auf der Oberseite des ersten Stegs 64a des Steckelementes 60a und mit der Auflagefläche 82 auf der Oberseite 30 des Bauelementes 20 auf.

### Bezugszeichenliste

- 1: Teleskoprohr
- 2: Innenrohr
- 4: Außenrohr
- 6: Fußelemente
- 8: Bolzen

- 10: Spindel
- 12: Spindelmutter
- 14: Getriebe
- 16: Getriebeausgangswelle
- 18: Getriebeeingangswelle

- 20: Bauelement
- 21: Haltevorsprung
- 22: rückseitiger Randabschnitt
- 24: vorderseitiger Randabschnitt
- 26a,b: seitliche Randabschnitte
- 27: Vorsprung
- 28a,b: erstes Mittel

- 30: Oberseite
- 32: Schraube
- 34: Öffnung
- 41: Freiraum
- 42: Rückwand
- 44: Vorderwand
- 46a,b: Seitenwand
- 47a,b: Montageöffnung
- 48a,b: zweites Mittel
- 49: Freiraum

- 50a,b,c: Steckelement
- 51: Steckvorsprung
- 52: Platte
- 54: erster Steg
- 56: Aufnahmenut
- 57a,b: zweiter Steg
- 58: drittes Mittel

- 60a,b,c: Steckelement
- 61: Steckvorsprung
- 62: Platte
- 64a,b: erster Steg
- 66: Aufnahmenut
- 67a,b: zweiter Steg
- 68: drittes Mittel
- 69: Schraube

- 70: Steckelement
- 71: Steckvorsprung
- 72: Platte
- 74: Grundkörper
- 78: drittes Mittel
- 80: erste Auflagefläche
- 82: zweite Auflagefläche

- 90: Befestigungsblech
- 91: Befestigungsblech

- 100: Stützwinde

- L: Längsachse des Teleskoprohres
- K: Kraftfluss

## Patentansprüche

1. Längenverstellbares Teleskoprohr (1) mit einer Längsachse L, das ein Innenrohr (2) und ein Außenrohr (4) aufweist, wobei an und/oder in mindestens einem Rohr (2, 4) mindestens ein Bauelement (20) angeordnet ist,
wobei das Bauelement (20) erste Mittel (28a,b) und das Rohr (2, 4) zweite Mittel (48a,b) aufweist,
wobei mindestens ein Steckelement (50, 60, 70) mit dritten Mitteln (58, 68, 78) vorgesehen ist, die mit den ersten Mitteln (28a,b) und zweiten Mitteln (48a,b) zur formschlüssigen Fixierung des Bauelementes (20) zusammenwirken, wobei
das Steckelement (50, 60, 70) kraftschlüssig und/oder stoffschlüssig mit dem Rohr (2, 4) verbunden ist, **dadurch gekennzeichnet, dass** das dritte Mittel des Steckelementes (50, 60, 70) mindestens ein Steckvorsprung (51, 61, 71) ist.

2. Teleskoprohr nach Anspruch 1,
**dadurch gekennzeichnet,**
**dass** das Bauelement (20) ein druckbelastetes Bauelement ist.

3. Teleskoprohr nach Anspruch 1 oder 2,
**dadurch gekennzeichnet,**
**dass** das erste Mittel (28a,b) des Bauelements (20) mindestens ein Haltevorsprung (21) ist.

4. Teleskoprohr nach einem der Ansprüche 1 bis 3,
**dadurch gekennzeichnet,**
**dass** das zweite Mittel (48a,b) des Rohrs (2, 4) mindestens eine Montageöffnung (47a,b) ist.

5. Teleskoprohr nach einem der Ansprüche 1 bis 4,
**dadurch gekennzeichnet,**
**dass** der Steckvorsprung (51, 61, 71) mindestens ein Steg (54, 57, 64, 67) ist, an dem das erste Mittel (28a,b) des Bauelementes (20) anliegt.

6. Teleskoprohr nach einem der Ansprüche 1 bis 5,
**dadurch gekennzeichnet,**
**dass** das Rohr (2, 4) und das Bauelement (20) aus unterschiedlichen Materialien bestehen.

7. Teleskoprohr nach einem der Ansprüche 1 bis 6,
**dadurch gekennzeichnet,**
**dass** das Steckelement (50, 60, 70) aus demselben Material wie das Rohr (2, 4) besteht.

8. Teleskoprohr nach einem der Ansprüche 1 bis 7,
**dadurch gekennzeichnet,**
**dass** das Bauelement (20) zusätzlich kraftschlüssig mit dem Rohr (2, 4) verbunden ist.

9. Stützwinde (100) mit einem Teleskoprohr (1) gemäß einem der Ansprüche 1 bis 8 und mit einer Spindel (10), wobei das Bauelement (20) ein Lagerbock für die Spindel (10) ist und der Lagerbock am Außenrohr (4) befestigt ist.

10. Stützwinde nach Anspruch 9,
**dadurch gekennzeichnet,**
**dass** das Außenrohr (4) einen rechteckigen Querschnitt mit Rückwand (42), Vorderwand (44) und zwei Seitenwänden (46a,b) aufweist, wobei das Bauelement (20) mit mindestens zwei Wänden (46a,b) des Außenrohres (4) formschlüssig verbunden ist.

11. Stützwinde nach Anspruch 9 oder 10,
**dadurch gekennzeichnet,**
**dass** im belasteten Zustand der Stützwinde (100) das dritte Mittel des Steckelementes (50, 60, 70) im Kraftfluss zwischen dem ersten Mittel (28a,b) und zweiten Mittel (48a,b) angeordnet ist.

12. Montageverfahren für mindestens ein Bauelement (20), das erste Mittel (28a,b) aufweist, an und/oder in einem Rohr (2, 4) eines Teleskoprohres (1), das zweite Mittel (48a,b) aufweist, wobei das Teleskoprohr eine Längsachse L aufweist, mit folgenden Schritten:
a) Translatorisches Einführen des Bauelementes (20) in das Rohr (2, 4) in bezüglich der Längsachse L gekipptem Zustand (T1),
b) Ausrichten des Bauelements und Einführen der ersten Mittels (28a,b) des Bauelementes (20) in die zweiten Mittel (48a,b) des Rohres (2, 4) (R2 und T3),
c) Einstecken von mindestens einem, dritte Mittel (58, 68, 78) aufweisenden Steckelement (50, 60, 70) in die zweiten Mittel (48a,b) des Rohres, wobei die dritten Mittel (58, 68, 78) zur formschlüssigen Fixierung des Bauelementes (20) mit den ersten Mitteln (28a,b) und zweiten Mitteln (48a,b) zusammenwirken, und
d) kraft- und/oder stoffschlüssiges Verbinden von Steckelement (50, 60, 70) und Rohr (2, 3).

13. Verfahren nach Anspruch 12,
**dadurch gekennzeichnet,**
**dass** das Steckelement (50, 60, 70) von der Außenseite des Rohres (2, 4) eingesteckt wird.

14. Verfahren nach einem der Ansprüche 12 oder 13,
**dadurch gekennzeichnet,**
**dass** das Steckelement (50, 60, 70) von der Innenseite des Rohres (2, 4) eingesteckt wird.

15. Verfahren nach einem der Ansprüche 12 bis 14,
**dadurch gekennzeichnet,**
**dass** zwischen den Schritten b) und c) das Bauelement (20) senkrecht zur Längsachse L verschoben wird (T4).

16. Verfahren nach einem der Ansprüche 12 bis 15,
**dadurch gekennzeichnet,**
**dass** im Schritt b) zuerst ein erstes von zwei ersten Mitteln (28a,b) des Bauelementes (20) in ein erstes zweites Mittel (48a,b) des Rohrs (2, 4) eingeführt wird, dass das Bauelement (20) senkrecht zur Längsachse L ausgerichtet wird, und dass das Bauelement (20) mit einem zweiten der zwei ersten Mittel (28a,b) senkrecht zur Längsachse L in ein weiteres zweites Mittel (48a,b) eingeschoben wird.

## Claims

1. Longitudinally adjustable telescope-like pipe (1) which has a longitudinal axis L and which has an inner pipe (2) and an outer pipe (4), wherein at least one structural element (20) is arranged on and/or in at least one pipe (2, 4),
wherein the structural element (20) has first means (28a, b) and the pipe (2, 4) has second means (48a, b),
wherein there is provided at least one plug-type element (50, 60, 70) having three means (58, 68, 78) which cooperate with the first means (28a, b) and second means (48a, b) in order to fix the structural element (20) in a positive-locking manner,
wherein the plug-type element (50, 60, 70) is connected to the pipe (2, 4) in a non-positive-locking and/or materially engaging manner, **characterised in that** the third means of the plug-type element (50, 60, 70) is at least one plug-type projection (51, 61, 71).

2. Telescope-like pipe according to claim 1,
**characterised in that**
the structural element (20) is a pressure-loaded structural element.

3. Telescope-like pipe according to claim 1 or claim 2,
**characterised in that**
the first means (28a, b) of the structural element (20) is at least one retention projection (21).

4. Telescope-like pipe according to any one of claims 1 to 3,
**characterised in that**
the second means (48a, b) of the pipe (2, 4) is at least one assembly opening (47a, b).

5. Telescope-like pipe according to any one of claims 1 to 4,
**characterised in that**
the plug-type projection (51, 61, 71) is at least one web (54, 57, 64, 67) which the first means (28a, b) of the structural element (20) abuts.

6. Telescope-like pipe according to any one of claims 1 to 5,
**characterised in that**
the pipe (2, 4) and the structural element (20) comprise different materials.

7. Telescope-like pipe according to any one of claims 1 to 6,
**characterised in that**
the plug-type element (50, 60, 70) comprises the same material as the pipe (2, 4).

8. Telescope-like pipe according to any one of claims 1 to 7,
**characterised in that**
the structural element (20) is additionally connected to the pipe (2, 4) in a non-positive-locking manner.

9. Support winch (100) having a telescope-like pipe (1) according to any one of claims 1 to 8 and having a spindle (10), wherein the structural element (20) is a bearing block for the spindle (10) and the bearing block is secured to the outer pipe (4).

10. Support winch according to claim 9,
**characterised in that**
the outer pipe (4) has a rectangular cross-section with a rear wall (42), front wall (44) and two side walls (46a, b), wherein the structural element (20) is connected to at least two walls (46a, b) of the outer pipe (4) in a positive-locking manner.

11. Support winch according to claim 9 or claim 10,
**characterised in that**,
in the loaded state of the support winch (100), the third means of the plug-type element (50, 60, 70) is arranged in the force path between the first means (28a, b) and the second means (48a, b).

12. Assembly method for at least one structural element (20) which has first means (28a, b) on and/or in a pipe (2, 4) of a telescope-like pipe (1) which has second means (48a, b), wherein the telescope-like pipe has a longitudinal axis L, having the following steps:
a) translational introduction of the structural element (20) into the pipe (2, 4) in the tilted state (T1) with respect to the longitudinal axis L,
b) orientating the structural element and introducing the first means (28a, b) of the structural element (20) into the second means (48a, b) of the pipe (2, 4) (R2 and T3),
c) inserting at least one plug-type element (50, 60, 70) which has third means (58, 68, 78) into the second means (48a, b) of the pipe, wherein the third means (58, 68, 78) cooperate for positive-locking fixing of the structural element (20) with the first means (28a, b) and second means (48a, b), and
d) connecting the plug-type element (50, 60, 70) and pipe (2, 3) in a non-positive-locking and/or materially engaging manner.

13. Method according to claim 12,
**characterised in that**
the plug-type element (50, 60, 70) is inserted from the outer side of the pipe (2, 4).

14. Method according to either claim 12 or claim 13,
**characterised in that**
the plug-type element (50, 60, 70) is inserted from the inner side of the pipe (2, 4).

15. Method according to any one of claims 12 to 14,
**characterised in that**,
between the steps b) and c), the structural element (20) is displaced (T4) perpendicularly to the longitudinal axis L.

16. Method according to any one of claims 12 to 15,
**characterised in that**,
in the step b), a first of two first means (28a, b) of the structural element (20) is first introduced into a first second means (48a, b) of the pipe (2, 4), **in that** the structural element (20) is orientated perpendicularly to the longitudinal axis L, and **in that** the structural element (20) is inserted with a second of the two first means (28a, b) perpendicularly to the longitudinal axis L into another second means (48a, b).

## Revendications

1. Tube télescopique (1) réglable en longueur ayant un axe longitudinal L, qui présente un tube intérieur (2) et un tube extérieur (4), au moins un élément structural (20) étant disposé sur et/ou dans au moins un tube (2, 4),
dans lequel l'élément structural (20) présente des premiers moyens (28a, b) et le tube (2, 4) des deuxièmes moyens (48a, b),
dans lequel au moins un élément enfichable (50, 60, 70) est prévu avec des troisièmes moyens (58, 68, 78) qui coopèrent avec les premiers moyens (28a, b) et les deuxièmes moyens (48a, b) pour la fixation par complémentarité de forme de l'élément structural (20),
dans lequel l'élément enfichable (50, 60, 70) est relié au tube (2, 4) par conjugaison de forces et/ou coopération de matières,
**caractérisé en ce que** le troisième moyen de l'élément enfichable (50, 60, 70) est au moins une saillie d'enfichage (51, 61, 71).

2. Tube télescopique selon la revendication 1,
**caractérisé en ce**
**que** l'élément structural (20) est un élément structural sollicité en compression.

3. Tube télescopique selon la revendication 1 ou 2,
**caractérisé en ce**
**que** le premier moyen (28a, b) de l'élément structural (20) est au moins une saillie de retenue (21).

4. Tube télescopique selon l'une des revendications 1 à 3,
**caractérisé en ce**
**que** le deuxième moyen (48a, b) du tube (2, 4) est au moins une ouverture de montage (47a, b).

5. Tube télescopique selon l'une des revendications 1 à 4,
**caractérisé en ce que** la saillie enfichable (51, 61, 71) est au moins une nervure (54, 57, 64, 67) contre laquelle s'appuie le premier moyen (28a, b) de l'élément structural (20).

6. Tube télescopique selon l'une des revendications 1 à 5,
**caractérisé en ce**
**que** le tube (2, 4) et l'élément structural (20) sont constitués de matériaux différents.

7. Tube télescopique selon l'une des revendications 1 à 6,
**caractérisé en ce**
**que** l'élément enfichable (50, 60, 70) est constitué du même matériau que le tube (2, 4).

8. Tube télescopique selon l'une des revendications 1 à 7,
**caractérisé en ce**
**que** l'élément structural (20) est en outre relié au tube (2, 4) par conjugaison de forces.

9. Béquille (100) avec un tube télescopique (1) selon l'une des revendications 1 à 8 et avec une broche (10), l'élément structural (20) étant un support de palier pour la broche (10) et le support de palier étant fixé au tube extérieur (4).

10. Béquille selon la revendication 9,
**caractérisée en ce**
**que** le tube extérieur (4) présente une section transversale rectangulaire avec une paroi arrière (42), une paroi avant (44) et deux parois latérales (46a, b), l'élément structural (20) étant relié par complémentarité de forme à au moins deux parois (46a, b) du tube extérieur (4).

11. Béquille selon la revendication 9 ou 10,
**caractérisée en ce**
**qu'**à l'état chargé de la béquille (100), le troisième moyen de l'élément enfichable (50, 60, 70) est disposé dans le flux de force entre le premier moyen (28a, b) et le deuxième moyen (48a, b).

12. Procédé de montage d'au moins un élément structural (20) qui présente des premiers moyens (28a, b) sur et/ou dans un tube (2, 4) d'un tube télescopique (1) qui présente des deuxièmes moyens (48a, b), le tube télescopique présentant un axe longitudinal L, comprenant les étapes suivantes consistant à :
a) insérer par translation l'élément structural (20) dans le tube (2, 4) dans un état (T1) incliné par rapport à l'axe longitudinal L,
b) orienter l'élément structural et insérer les premiers moyens (28a, b) de l'élément structural (20) dans les deuxièmes moyens (48a, b) du tube (2, 4) (R2 et T3),
c) enficher au moins un élément enfichable (50, 60, 70) présentant des troisièmes moyens (58, 68, 78) dans les deuxièmes moyens (48a, b) du tube, les troisièmes moyens (58, 68, 78) coopérant avec les premiers moyens (28a, b) et les deuxièmes moyens (48a, b) pour fixer l'élément (20) par complémentarité de forme, et
d) relier par conjugaison de forces et/ou coopération de matières l'élément enfichable (50, 60, 70) et le tube (2, 3).

13. Procédé selon la revendication 12,
**caractérisé en ce**
**que** l'élément enfichable (50, 60, 70) est enfiché depuis le côté extérieur du tube (2, 4).

14. Procédé selon l'une des revendications 12 ou 13,
**caractérisé en ce**
**que** l'élément enfichable (50, 60, 70) est enfiché depuis le côté intérieur du tube (2, 4).

15. Procédé selon l'une des revendications 12 à 14,
**caractérisé en ce**
**qu'**entre les étapes b) et c), l'élément structural (20) est déplacé (T4) perpendiculairement à l'axe longitudinal L.

16. Procédé selon l'une des revendications 12 à 15,
**caractérisé en ce**
**qu'**à l'étape b), on introduit d'abord un premier de deux premiers moyens (28a, b) de l'élément structural (20) dans un premier deuxième moyen (48a, b) du tube (2, 4), que l'élément structural (20) est orienté perpendiculairement à l'axe longitudinal L et que l'élément structural (20) est inséré avec un deuxième des deux premiers moyens (28a, b) perpendiculairement à l'axe longitudinal L dans un autre deuxième moyen (48a, b).
